(19) **Europäisches Patentamt / European Patent Office / Office européen des brevets**

(11) **EP 4 242 609 A1**

(12) # EUROPEAN PATENT APPLICATION
published in accordance with Art. 153(4) EPC

(43) Date of publication:
**13.09.2023 Bulletin 2023/37**

(21) Application number: **21891188.1**

(22) Date of filing: **11.11.2021**

(51) International Patent Classification (IPC):
**G01J 5/00** (2022.01)  **G06K 9/00** (2022.01)

(52) Cooperative Patent Classification (CPC):
**G01J 5/0025; G01J 5/00; G01J 5/48; G01J 5/54;**
**G06F 18/00; G06N 3/04; G06N 3/08; G06V 10/25;**
**G06V 10/44; G06V 10/80; G06V 10/82;**
G01J 2005/0077

(86) International application number:
**PCT/CN2021/130101**

(87) International publication number:
**WO 2022/100668 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2020 CN 202011273221**

(71) Applicant: Hangzhou Hikvision Digital
Technology Co., Ltd.
**Hangzhou, Zhejiang 310051 (CN)**

(72) Inventors:
• **YANG, Ping**
**Hangzhou, Zhejiang 310051 (CN)**

• **PANG, Chengshan**
**Hangzhou, Zhejiang 310051 (CN)**
• **XIE, Di**
**Hangzhou, Zhejiang 310051 (CN)**
• **PU, Shiliang**
**Hangzhou, Zhejiang 310051 (CN)**
• **MA, Dongwei**
**Hangzhou, Zhejiang 310051 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **TEMPERATURE MEASUREMENT METHOD, APPARATUS, AND SYSTEM, STORAGE MEDIUM, AND PROGRAM PRODUCT**

(57) The embodiments of the present application provide temperature measurement methods, apparatuses and systems, storage media and computer program products, relating to the field of computer vision research. The temperature measurement method includes: obtaining a first visible light image and a first thermal infrared image; obtaining first position information by performing target object detection on the first visible light image, where the first position information indicates a position of a target object in the first visible light image; obtaining local images by performing image cropping on the first visible light image and the first thermal infrared image based on the first position information; obtaining target binocular parallax by inputting the first position information and the local images into a parallax estimation network model; determining second position information according to the first position information and the target binocular parallax; and determining a temperature of the target object according to the second position information from the first thermal infrared image. In this way, based on the target binocular parallax and the first position information, the position of the target object in the first thermal infrared image can be determined, thereby determining the temperature of the target object.

**(Cont. next page)**

Acquire a first visible light image and a first thermal infrared image ~ 501

Obtain first position information by performing target object detection on the first visible light image ~ 502

Obtain local images by performing image cropping on the first visible light image and the first thermal infrared image based on the first position information ~ 503

Acquire target binocular parallax by inputting the first position information and the local images into a parallax estimation network model ~ 504

Determine the second position information according to the first position information and the target binocular parallax ~ 505

Determine a temperature of the target object from the first thermal infrared image according to the second position information ~ 506

FIG. 5

## Description

Embodiments of the present application claim priority to Chinese Patent Application No. 202011273221.8 entitled "TEMPERATURE MEASUREMENT METHODS, APPARATUSES AND SYSTEMS" and filed on November 13, 2020, entire contents of which are incorporated by reference in the embodiments of the present application.

## TECHNICAL FIELD

Embodiments of the present application relate to the field of computer vision research, in particular to temperature measurement methods, apparatuses and systems, storage media, and computer program products.

## BACKGROUND

Stations, airports, hospitals, ports, schools and other public places with a large flow of people may need temperature measurement to identify people with fever, especially in the case of an epidemic, temperature measurement is even more important.

Generally, non-contact temperature measurement manners are adopted for temperature measurement in public places. Temperature measurement systems in common use can include handheld thermometers and uncooled infrared temperature measurement systems. Since the handheld thermometer can only perform measurement on a single person at a time, and it often happens that a person needs to be measured repeatedly to complete the temperature measurement, the handheld thermometer is inefficient and poor in accuracy. As such, the temperature measurement in public places is mostly done with the uncooled infrared temperature measurement system. In related art, different colors in a thermal infrared image represent different temperatures of a measured object, and an overall temperature distribution of the measured object can be observed by viewing the thermal infrared image. Therefore, temperature measurement is generally based on a thermal infrared image captured by a thermal infrared camera in the uncooled infrared temperature measurement system, target object detection is performed for the thermal infrared image, and then, when a position of the target object is determined, a temperature of the target object is determined according to the position at the thermal infrared image.

However, for using a thermal infrared image to locate a position of a target object, since an original resolution of the thermal infrared image is low and texture details of the thermal infrared image are easily lost, the target object may be mixed with background, other objects or the like, making it difficult to identify the target object from the thermal infrared image, and thus unable to determine the temperature of the target object, resulting in a temperature measurement failure.

## SUMMARY

Embodiments of the present disclosure provide temperature measurement methods, apparatuses and systems, which can accurately locate a position of a target object in a thermal infrared image, and determine a temperature of the target object according to the position of the target object, thereby improving the accuracy of temperature measurement. The described technical solution are as follows.

In an aspect, a temperature measurement method is provided and the method includes:

obtaining a first visible light image and a first thermal infrared image;

obtaining first position information by performing target object detection on the first visible light image, where the first position information indicates a position of a target object in the first visible light image;

obtaining local images by performing image cropping on the first visible light image and the first thermal infrared image based on the first position information;

obtaining target binocular parallax by inputting the first position information and the local images into a parallax estimation network model, where the target binocular parallax indicates binocular parallax between a visible light image and a thermal infrared image including the target object;

determining second position information according to the first position information and the target binocular parallax, where the second position information indicates a position of the target object in the first thermal infrared image; and

determining a temperature of the target object according to the second position information from the first thermal infrared image.

Optionally, obtaining the local images by performing the image cropping on the first visible light image and the first thermal infrared image based on the first position information includes:

determining target position information by performing position expansion on the first position information; and

obtaining a local visible light image by cropping an image corresponding to the target position information from the first visible light image, and obtaining a local thermal infrared image by cropping an image corresponding to the target position information from the first thermal infrared image;

where the local images include the local visible light image and the local thermal infrared image.

Optionally, the first position information includes a first detection box, the target position information includes a target detection box, and a center of the first detection box coincides with a center of the target detection box; and

obtaining the target position information by performing the position expansion on the first position information includes:
determining the target detection box by expanding the first detection box by a target size in all directions based on the center of the first detection box.

Optionally, the parallax estimation network model includes one or more feature extraction network layers, one or more feature fusion network layers and one or more parallax estimation network layers;

where obtaining the target binocular parallax by inputting the first position information and the local images into the parallax estimation network model includes:
obtaining one or more high-level features of the target object by invoking the one or more feature extraction network layers to perform feature extraction on the first position information and the local images;
obtaining one or more fusion features of the target object by invoking the one or more feature fusion network layers to perform feature fusion on the one or more high-level features of the target object; and
obtaining the target binocular parallax by invoking the one or more parallax estimation network layers to perform parallax estimation on the one or more fusion features of the target object.

Optionally, the local images include a local visible light image and a local thermal infrared image, and the one or more feature extraction network layers include a first extraction sub-network layer, a second extraction sub-network layer and a third extraction sub-network layer;

obtaining the one or more high-level features of the target object by invoking the one or more feature extraction network layers to perform the feature extraction on the first position information and the local images includes:
obtaining one or more first high-level features by invoking the first extraction sub-network layer to perform feature extraction on the first position information;
obtaining one or more second high-level features by invoking the second extraction sub-network layer to perform feature extraction on the local visible light image; and
obtaining one or more third high-level features by invoking the third extraction sub-network layer to perform feature extraction on the local thermal infrared image;
where the high-level features of the target object include the first high-level features, the second high-level features, and the third high-level features.

Optionally, a training process of the parallax estimation network model includes:

acquiring one or more training samples, where each of the training samples includes a reference visible light image, a reference thermal infrared image, reference position information and reference binocular parallax, the reference position information indicates a position of a target object in the reference visible light image, and the reference binocular parallax includes binocular parallax between the reference visible light image and the reference thermal infrared image;
obtaining estimated binocular parallax by invoking the parallax estimation network model to process the reference visible light image, the reference thermal infrared image, and the reference position information;
calculating a predicted loss value of the parallax estimation network model according to the estimated binocular parallax and the reference binocular parallax; and
adjusting parameters of the parallax estimation network model according to the predicted loss value.

Optionally, after determining the temperature of the target object according to the second position information from the first thermal infrared image, the method further includes:

determining a distance between the target object and a heterogeneous binocular camera according to the target binocular parallax, where the heterogeneous binocular camera includes a visible light camera for capturing visible light images and a thermal infrared camera for capturing thermal infrared images;
acquiring a temperature attenuation value corresponding to the distance; and
obtaining a corrected temperature of the target object by performing correction on the temperature according to the temperature attenuation value.

Optionally, obtaining the first visible light image and the first thermal infrared image includes:

obtaining a second visible light image and a second thermal infrared image, where the second visible light image and the second thermal infrared image are captured by a heterogeneous binocular camera;
obtaining a processed visible light image and a processed thermal infrared image by performing scaling on the second visible light image and the second thermal infrared image;
obtaining one or more correction parameters corresponding to the heterologous binocular camera; and
obtaining the first visible light image and the first thermal infrared image by performing binocular correction on the processed visible light image and the processed thermal infrared image according to the one or more correction parameters.

Optionally, obtaining the one or more correction parameters corresponding to the heterologous binocular camera includes:

obtaining calibration visible light images and calibration thermal infrared images, where the calibration visible light images and the calibration thermal infrared images are obtained by capturing a target temperature calibration board with the heterogeneous binocular camera;
obtaining processed calibration visible light images and processed calibration thermal infrared images by performing scaling on the calibration visible light images and the calibration thermal infrared images; and
determining the one or more correction parameters by performing binocular correction on the processed calibration visible light images and the processed calibration thermal infrared images.

Optionally, determining the second position information according to the first position information and the target binocular parallax includes:
taking a difference between the first position information and the target binocular parallax as the second position information.

In another aspect, a temperature measurement apparatus is provided and the apparatus includes:

a first obtaining module, configured to obtain a first visible light image and a first thermal infrared image;
a target detecting module, configured to obtain first position information by performing target object detection on the first visible light image, where the first position information indicates a position of a target object in the first visible light image;
an image cropping module, configured to obtain local images by performing image cropping on the first visible light image and the first thermal infrared image based on the first position information;
a parallax determining module, configured to obtain target binocular parallax by inputting the first position information and the local images into a parallax estimation network model, where the target binocular parallax indicates binocular parallax between a visible light image and a thermal infrared image including the target object;
a target determining module, configured to determine second position information according to the first position information and the target binocular parallax, where the second position information indicates a position of the target object in the first thermal infrared image; and

a temperature determining module, configured to determine a temperature of the target object according to the second position information from the first thermal infrared image.

Optionally, the image cropping module includes:

a position expansion sub-module, configured to determine target position information by performing position expansion on the first position information; and
a cropping sub-module, configured to obtain a local visible light image by cropping an image corresponding to the target position information from the first visible light image, and obtain a local thermal infrared image by cropping an image corresponding to the target position information from the first thermal infrared image;
where the local images include the local visible light image and the local thermal infrared image.

Optionally, the first position information includes a first detection box, the target position information includes a target detection box, and a center of the first detection box coincides with a center of the target detection box; and

the position expansion sub-module is specifically configured to:
determine the target detection box by expanding the first detection box by a target size in all directions based on the center of the first detection box.

Optionally, the parallax estimation network model includes one or more feature extraction network layers, one or more feature fusion network layers and one or more parallax estimation network layers;

where the parallax determining module includes:
a feature extraction sub-module, configured to invoke the one or more feature extraction network layers to perform feature extraction on the first position information and the local images, so as to obtain one or more high-level features of the target object;
a feature fusion sub-module, configured to invoke the one or more feature fusion network layers to perform feature fusion on the one or more high-level features of the target object, so as to obtain one or more fusion features of the target object; and
a parallax estimation sub-module, configured to invoke the one or more parallax estimation network layers to perform parallax estimation on the one or more fusion features of the target object, so as to obtain the target binocular parallax.

Optionally, the local images include a local visible light image and a local thermal infrared image, and the one or more feature extraction network layers include a first extraction sub-network layer, a second extraction sub-network layer and a third extraction sub-network layer;

the feature extraction sub-module includes:
a first extraction sub-unit, configured to invoke the first extraction sub-network layer to perform feature extraction on the first position information, so as to obtain one or more first high-level features;
a second extraction sub-unit, configured to invoke the second extraction sub-network layer to perform feature extraction on the local visible light image, so as to obtain one or more second high-level features; and
a third extraction sub-unit, configured to invoke the third extraction sub-network layer to perform feature extraction on the local thermal infrared image, so as to obtain one or more third high-level features;
where the high-level features of the target object include the first high-level features, the second high-level features, and the third high-level features.

Optionally, the apparatus further includes a training module and an adjusting module.

The first obtaining module is configured to acquire one or more training samples, where each of the training samples includes a reference visible light image, a reference thermal infrared image, reference position information and reference binocular parallax, the reference position information indicates a position of a target object in the reference visible light image, and the reference binocular parallax includes binocular parallax between the reference visible light image and the reference thermal infrared image;

the parallax determining module is configured to obtain estimated binocular parallax by invoking the parallax estimation network model to process the reference visible light image, the reference thermal infrared image, and the reference position information;
the training module is configured to calculate a predicted loss value of the parallax estimation network model according to the estimated binocular parallax and the reference binocular parallax; and
the adjusting module is configured to adjust parameters of the parallax estimation network model according to the predicted loss value.

Optionally, the apparatus further includes:

a distance determining module, configured to determine a distance between the target object and a heterogeneous binocular camera according to the target binocular parallax, where the heterogeneous binocular camera includes a visible light camera for capturing visible light images and a thermal infrared camera for capturing thermal infrared images;
a second obtaining module, configured to acquire a temperature attenuation value corresponding to the distance; and
a temperature correcting module, configured to obtain a corrected temperature of the target object by performing correction on the temperature according to the temperature attenuation value.

Optionally, the first obtaining module includes:

a first obtaining sub-module, configured to obtain a second visible light image and a second thermal infrared image, where the second visible light image and the second thermal infrared image are captured by a heterogeneous binocular camera;
an image adjusting sub-module, configured to obtain a processed visible light image and a processed thermal infrared image by performing scaling on the second visible light image and the second thermal infrared image;
a second obtaining sub-module, configured to obtain one or more correction parameters corresponding to the heterologous binocular camera; and
a correcting sub-module, configured to obtain the first visible light image and the first thermal infrared image by performing binocular correction on the processed visible light image and the processed thermal infrared image according to the one or more correction parameters.

Optionally, the second obtaining sub-module includes:

a first obtaining sub-unit, configured to obtain calibration visible light images and calibration thermal infrared images, where the calibration visible light images and the calibration thermal infrared images are obtained by capturing a target temperature calibration board with the heterogeneous binocular camera;
an image adjusting sub-unit, configured to obtain processed calibration visible light images and processed calibration thermal infrared images by performing scaling on the calibration visible light images and the calibration thermal infrared images; and
a correcting sub-unit, configured to determine the one or more correction parameters by performing binocular correction on the processed calibration visible light images and the processed calibration thermal infrared images.

Optionally, the target determining module is configured to:
take a difference between the first position information and the target binocular parallax as the second position information.

In still another aspect, a temperature measurement system including a heterogeneous binocular camera and a computer device is provided.

The heterogeneous binocular camera includes a visible light camera and a thermal infrared camera;

the visible light camera is for capturing a first visible light image;
the thermal infrared camera is for capturing a first thermal infrared image;
the computer device includes a processor, which is configured to:
obtain first position information by performing target object detection on the first visible light image, where the first position information indicates a position of a target object in the first visible light image;
obtain local images by performing image cropping on the first visible light image and the first thermal infrared image based on the first position information;
obtain target binocular parallax by inputting the first position information and the local images into a parallax estimation network model, where the target binocular parallax indicates binocular parallax between a visible light image and a thermal infrared image including the target object;
determine second position information according to the first position information and the target binocular parallax, where the second position information indicates a position of the target object in the first thermal infrared image; and
determine a temperature of the target object according to the second position information from the first thermal infrared image.

Optionally, the computer device further includes a display device; and
the display device is configured to display the temperature of the target object.

In still another aspect, a computer readable storage medium is provided. The computer readable storage medium stores instructions, and the instructions are executed by a processor to implement steps of the temperature measurement methods described in the above aspect.

In still another aspect, a computer program product is provided. While the computer program product is executed, steps of the temperature measurement methods described in the above aspect are implemented.

The technical solutions provided in the embodiments of the present application may bring at least the following beneficial effects.

In technical solutions provided by the embodiments of the present application, by using a position of a target object in a visible light image and binocular parallax between the visible light image and a thermal infrared image, a position of the target object in the thermal infrared image can be determined. Further, according to the position of the target object in the thermal infrared image, a temperature of the target object can be determined from the thermal infrared image. Visible light images have high resolution, rich texture detail information and other characteristics compared with thermal infrared images. Comparing with determining the position of the target object directly based on a thermal infrared image, which may lead to inaccurate position determination, in the embodiments of the present application, the position of the target object in the thermal infrared image is determined indirectly based on the visible light image, and more texture detail information is incorporated during the position determination, so as to accurately and effectively determine the position of the target object in the thermal infrared image, which helps to determine the temperature of the target object based on a precise position of the target object.

Moreover, in the technical solutions provided by the embodiments of the present application, the binocular parallax between the visible light image and the thermal infrared image is determined according to the parallax estimation network model. When the training for the parallax estimation network model is completed, the binocular parallax can be obtained by inputting the local visible light image and the local thermal infrared image containing the target into the parallax estimation network model, thus reducing a series of trivial and complicated mathematical operations and providing a simple and efficient way to determine the binocular parallax. The efficiency of determining the binocular parallax can be improved through the parallax estimation network model, and the position of the target object is determined according to the binocular parallax, which improves the efficiency of determining the target object's position, so as to further improve the efficiency of temperature measurement for the target obj ect.

In addition, in the technical solutions provided by the embodiments of the present application, the input of the parallax estimation network model can include the local images cropped according to the position of the target object in the visible light image. Since a complete captured image can include not only the target object but also interference information such as the background, other objects or the like, compared with directly inputting the complete captured images into the parallax estimation network model, the embodiments of the present application input the local images related to the target object into a neural network model, which reduces the interference information in the captured image, helps to obtain more accurate binocular parallax, and fully improves the efficiency of temperature measurement.

**BRIEF DESCRIPTION OF THE DRAWINGS**

In order to more clearly illustrate the technical solutions in embodiments of the present application, accompanying drawings to be referred in the embodiments will be briefly introduced below. Apparently, the accompanying drawings in the following description merely show some embodiments of the present application. For those of ordinary skill in the art, other drawings can be obtained based on these drawings without creative endeavor.

FIG. 1 is a schematic diagram of a temperature measurement system provided by embodiments of the present application;

FIG. 2 is a structural schematic diagram of a heterogeneous binocular camera provided by the embodiments of the present application;

FIG. 3 is a flowchart of a binocular correction manner provided by the embodiments of the present application;

FIG. 4 is a schematic diagram of binocular calibration provided by the embodiments of the present application;

FIG. 5 is a flowchart of a temperature measurement method provided by the embodiments of the application;

FIG. 6 is a schematic diagram of a cropped local image provided by the embodiments of the present application;

FIG. 7 is a schematic diagram of a parallax estimation network model provided by the embodiments of the present application;

FIG. 8 is a structural schematic diagram of a temperature measurement apparatus provided by the embodiments of the present application; and

FIG. 9 is a structural schematic diagram of a computer device provided by the embodiments of the present application.

## DETAILED DESCRIPTION OF THE EMBODIMENTS

To make the purposes, technical solutions and advantages of the present application clearer, the embodiments of the present application will be further described in detail below in conjunction with the accompanying drawings.

Prior to explaining the embodiments of the present application in detail, terms and application scenarios involved in the embodiments of the present application are described first.

**Heterogeneous binocular camera**: compared with a normal binocular camera, two cameras of the heterogeneous binocular camera are different in design parameters, such as at least one of target light wavelengths, focal lengths, resolutions, pixel sizes, sensors, or lenses has inconsistent hardware specifications.

**Thermal infrared:** a spectrum name. A wavelength of an infrared spectrum ranges from 0.76 to 1000 micron, where 0.76 to 3.0 micron indicates a reflection infrared band, and 3 to 18 micron indicates an emission infrared band. A thermal infrared camera mentioned in the embodiments of the present application refers to a capturing device of a thermal imaging camera type, which is capable of measuring a temperature.

A thermal infrared camera works by using an optoelectronic device to detect and measure radiation, and by establishing a correlation between the radiation and surface temperatures. All objects above absolute zero (-273 °C) can emit infrared radiation. The thermal infrared camera can utilize an infrared detector and an optical imaging objective lens to receive infrared radiation from a measured target, and reflect a radiation energy distribution pattern onto one or more photosensitive elements of the infrared detector, so as to obtain a thermal infrared image which corresponds to a heat distribution field on the object's surface. That is, the thermal infrared camera can convert invisible infrared energies emitted by an object into a visible thermal infrared image. Different colors in the thermal infrared image represent different temperatures of the measured object. By looking at the thermal infrared image, an overall temperature distribution of the measured object can be observed and heat generation of the measured object can be studied, thereby making a determination for the next step.

The relevant terms involved in the embodiments of the present application have been introduced, and the application scenarios for the embodiments of the present application are described next.

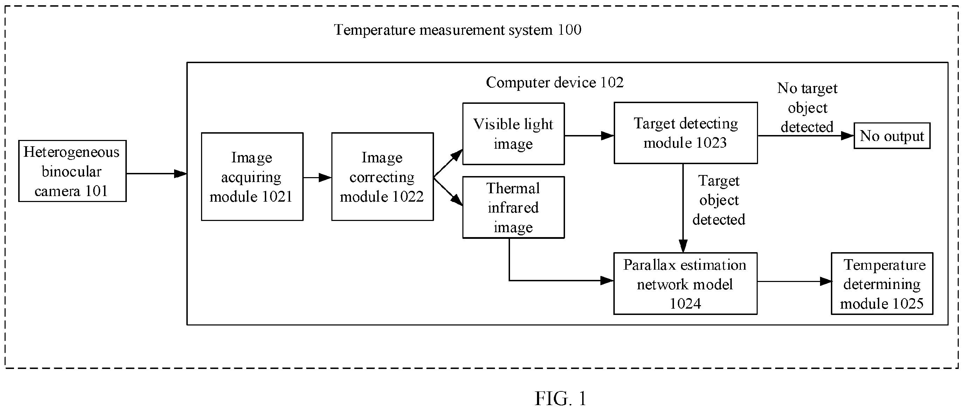

Referring to FIG. 1, FIG. 1 is a schematic diagram of a temperature measurement system provided by the embodiments of the present application. Temperature measurement system 100 includes heterogeneous binocular camera 101 and computer device 102.

Compared with a high definition visible light image taken by a visible light camera, a grayscale image taken by a thermal infrared camera has a lower resolution and poorer imaging quality, making it difficult to accurately and stably detect target object(s) from a thermal infrared image. Therefore, heterogeneous binocular camera 101 applied in temperature measurement system 100 use a combination of a visible light camera and a thermal infrared camera.

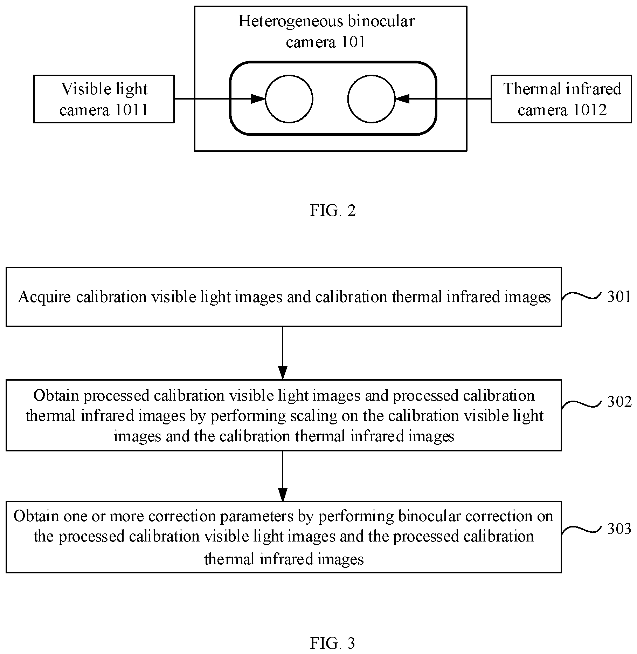

As an example, referring to FIG. 2, which is a structural schematic diagram of a heterogeneous binocular camera provided in an embodiment of the present application, heterogeneous binocular camera 101 includes visible light camera 1011 and thermal infrared camera 1012. Visible light camera 1011 is used to capture a high definition visible light image, and thermal infrared camera 1012 is used to capture a thermal infrared image reflecting temperature information. The visible light image can be used for detecting a target object and the thermal infrared image can be used to determine a temperature of the target object.

Computer device 102 can include a processor and a display device, where the processor can be used to determine the temperature of the target object according to the visible light image and the thermal infrared image, and the display device can be used to display the temperature.

As an example, as shown in FIG. 1, computer device 102 can include image acquiring module 1021, image correcting module 1022, target detecting module 1023, parallax estimation network model 1024, and temperature determining module 1025. Image correcting module 1022 can be an optional module. In some examples, the computer device can further include an image cropping module.

Image acquiring module 1021 can be used to acquire a visible light image and a thermal infrared image captured by heterogeneous binocular camera 101. When the visible light image and the thermal infrared image are acquired, image acquiring module 1021 can send the visible light image and the thermal infrared image to image correcting module 1022. Image correcting module 1022 can perform binocular correction processing on the visible light image and the thermal infrared image, so that corresponding pixels in the processed visible light image and thermal infrared image are located on the same horizontal line, that is, pixels in the visible light image and corresponding pixels in the thermal infrared image merely differ in abscissa.

Target detecting module 1023 can be used to detect one or more target objects from the visible light image, and determine one or more positions of the one or more target objects in the visible light image. For example, image correcting module 1022 sends the processed visible light image to target detecting module 1023, so as to perform target object detection on the visible light image through target detecting module 1023. In a case that a target object is detected, target detecting module 1023 can input position information of the target object, the visible light image including the target object, and a thermal infrared image captured at the same time to parallax estimation network model 1024. Or, in a case that a target object is detected, target detecting module 1023 can send the position information of the target object, the visible light image including the target object, and the thermal infrared image captured at the same time to the image cropping module. The image cropping module can crop the visible light image and the thermal infrared image based on the position information of the target object to obtain local images. The image cropping module can input the position information of the target object and the cropped local images to parallax estimation network model 1024. In a case that no target object is detected from the visible light image, no process is to be performed on the visible light image and the corresponding thermal infrared image, and the target object detection is performed on a next frame of visible light image.

By using a deep learning algorithm, parallax estimation network model 1024 can determine binocular parallax between the visible light image and the thermal infrared image according to the input position information of the target object, visible light image and thermal infrared image. Or, parallax estimation network model 1024 can determine the binocular parallax between the visible light image and the thermal infrared image based on the input position information of the target object and local images. Parallax estimation network model 1024 can be further used to send the determined binocular parallax to temperature determining module 1025.

Temperature determining module 1025 can determine, according to the position of the target object in the visible light image and the binocular parallax, a precise position of the target object in the thermal infrared image, so as to determine a temperature of the target object from the thermal infrared image according to the precise position.

It should be noted that the above-mentioned heterogeneous binocular camera 101 and computer device 102 may be two independent devices. Heterogeneous binocular camera 101 and computer device 102 described above may also be integrated into a temperature measurement device, which can perform temperature measurement as a whole. In a case that heterogeneous binocular camera 101 and computer device 102 are integrated into a temperature measurement device, computer device 102 may not include image acquiring module 1021, and heterogeneous binocular camera 101 can directly send a collected visible light image and thermal infrared image to image correcting module 1022. The above-mentioned computer device 102 may include, but is not limited to, the functional modules listed above, and may also include other functional modules to realize more accurate temperature measurement. In addition, the above-mentioned functional modules may work independently, or may be combined into fewer modules to complete temperature measurement, which is not limited in the embodiments of the present application, and FIG. 1 is merely an example for explanation.

In addition, for the heterogeneous binocular camera shown above in FIG. 2, since the visible light camera and the thermal infrared camera have different camera parameters, pixels in a visible light image and a thermal infrared image may not locate on the same horizontal line. Therefore, based on the visible light image and thermal infrared image captured by the heterogeneous binocular camera, prior to using the temperature measurement method provided by the embodiments of the application, the visible light camera and the thermal infrared camera may be calibrated to determine one or more calibration parameters for the visible light camera and the thermal infrared camera. The calibration parameters can include one or more camera intrinsic parameters, one or more camera extrinsic parameters and one or more distortion coefficients. In this way, according to the calibration parameters, binocular correction can be further performed on the visible light image and the thermal infrared image. In other words, adjustments such as rotation and translation can be performed on the thermal infrared image, so that matched feature points in the visible light image and the thermal infrared image are located on the same horizontal line, and corresponding pixels merely have a difference in abscissa.

In an example, the visible light camera and the thermal infrared camera can be calibrated using Zhang Zhengyou calibration manner to determine the calibration parameters for the visible light camera and the thermal infrared camera.

Zhang Zhengyou calibration manner refers to a camera calibration manner with a single plane checkerboard proposed by Professor Zhengyou Zhang in 1998. This manner is between a traditional calibration manner and a self-calibration manner, and this manner uses a printed checkerboard merely which can overcome shortcomings of the traditional calibration manner needing a high-precision calibration object. While compared with the self-calibration, this manner also improves the accuracy and is easy to operate.

An implementation process of calibrating a binocular camera with the Zhang Zhengyou calibration manner can include: printing a checkerboard calibration board, and taking pictures of the checkerboard calibration board from different angles with the binocular camera to obtain left-eye images and right-eye images. Feature points in the images are detected, and intrinsic and extrinsic parameter(s) of the binocular camera under an ideal undistorted condition are solved according to coordinates of corresponding feature points in the left-eye images and the right-eye images, during which Maximum Likelihood Estimate (MLE) is adopted for improving the accuracy. Further, actual distortion coefficient(s) is determined with a Least Squares Method, and intrinsic parameter(s), extrinsic parameter(s) as well as distortion coefficient(s) are integrated, while using the MLE to optimize the estimation for improving the accuracy. Thus, calibration parameters of the binocular camera are determined, thereby completing the calibration. The calibration parameters can include intrinsic parameter(s), extrinsic parameter(s) and distortion coefficient(s).

For example, in a case that the binocular camera is of a heterogeneous binocular camera including a visible light camera and a thermal infrared camera, the above-mentioned left-eye image may be an image taken by the visible light camera, and the right-eye image may be an image taken by the thermal infrared camera. Alternatively, the above-mentioned left-eye image may be an image taken by the thermal infrared camera, and the right-eye image may be an image taken by the visible light camera, which is not limited in the embodiments of the present application.

Next, based on the calibrated heterogeneous binocular camera, a binocular correction process for a visible light image and a thermal infrared image is described. FIG. 3 is a flowchart of a binocular correction manner provided by the embodiments of the present application. The manner can be applied to computer device 102 in the above-mentioned temperature measurement system 100. Referring to FIG. 3, the manner can include steps 301 to 303.

At step 301, calibration visible light images and calibration thermal infrared images are acquired.

The calibration visible light images and the calibration thermal infrared images can be acquired by capturing a target temperature calibration board with the calibrated heterogeneous binocular camera.

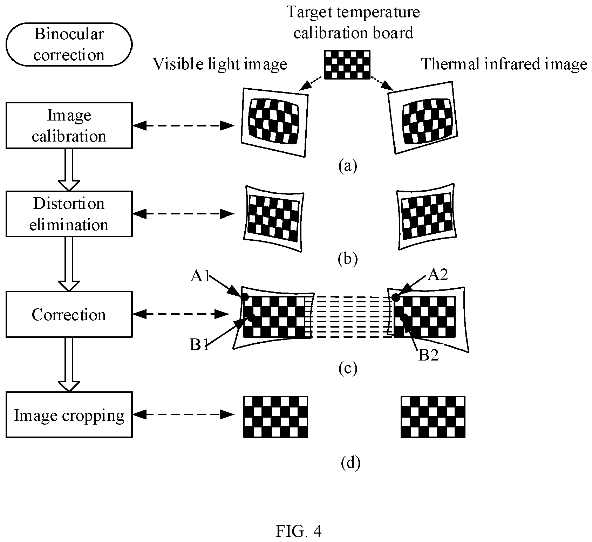

For example, the target temperature calibration board is a checkerboard calibration board shown in FIG. 4, and each square is attached with a heat source to provide various temperature information.

Based on different capturing angles, the heterogeneous binocular camera can capture the target temperature calibration board to obtain a plurality of sets of calibration visible light images and calibration thermal infrared images.

At step 302, processed calibration visible light images and processed calibration thermal infrared images are obtained by performing scaling on the calibration visible light images and the calibration thermal infrared images.

Since the visible light camera and the thermal infrared camera have different resolutions, the captured calibration visible light image and calibration thermal infrared image may differ in size. Therefore, it is necessary to perform scaling on the calibration visible light images and the calibration thermal infrared images, such that the processed calibration visible light images and the processed calibration thermal infrared images can have the same field of view and resolution.

Image enlarging, also known as upsampling or image interpolating, is primarily intended to enlarge an original image, so that the enlarged image can be displayed on a display device with a higher resolution. Image reduction, also known as subsampled or downsampled, is primarily intended to generate a thumbnail corresponding to the original image, or to make the original image conform to a size of a display area.

As a calibration thermal infrared image has a low resolution, operations of upsampling may be needed for the calibration thermal infrared image to reach a resolution of a calibration visible light image. Therefore, the calibration thermal infrared image may be enlarged to obtain the processed calibration thermal infrared image.

To avoid the low accuracy of upsampled image information caused by performing interpolating on the calibration thermal infrared image, a display size of the calibration visible light image can be reduced by performing operations of downsampling according to the resolution of the calibration thermal infrared image as well. Therefore, the calibration visible light image may be scaled down to obtain the processed calibration visible light image as well.

In addition, scaling can be performed on both the calibration visible light image and the calibration thermal infrared image as well, so that the processed calibration visible light image and the processed calibration thermal infrared image can have the same resolution, which is not limited in the embodiments of the present application.

As an example, assuming that a resolution of a calibration visible light image is 640*480, and a resolution of a calibration thermal infrared image is 320*240, upsampling can be performed on the calibration thermal infrared image to enlarge the calibration thermal infrared image. As such, a resolution of the processed calibration thermal infrared image is 640*480, and display sizes of the processed calibration thermal infrared image and the calibration visible light image are the same.

At step 303, one or more correction parameters are obtained by performing binocular correction on the processed calibration visible light images and the processed calibration thermal infrared images.

Firstly, in actual capturing, a lens of a camera cannot perform ideal perspective imaging, and may bring in varying degrees of distortion. Theoretically, lens distortion can include radial distortion and tangential distortion, while the tangential distortion has less influence, and usually merely the radial distortion is considered.

The radial distortion is mainly caused by radial curvature of the lens (light curves more away from a center of the lens than it does near the center), making a real imaging point to deviate inward or outward from an ideal imaging point. For distortion that a distortion imaging point deviates radially outward relative to the ideal imaging point and away from the center, the distortion can be referred to as pincushion distortion. For distortion that a distortion imaging point deviates radially inward relative to the ideal imaging point and is approaching the center, the distortion can be referred to as barrel distortion. In FIG. 4, barrel distortion is merely illustrated as an example, and is not meant to be a limitation.

As shown in part (c) of FIG. 4, one or more feature points are determined in the processed calibration visible light image, where a feature point can be any corner point of a black or white grid in the checkerboard, for example, point A1 shown in the figure. According to position coordinates of corresponding points, under ideal conditions without distortion, intrinsic and extrinsic parameters between a visible light camera and a thermal infrared camera can be determined. Further, according to the intrinsic and extrinsic parameters of the cameras, an actual radial distortion coefficient can be obtained by using a Least Squares Method. For specific calibration processes of the cameras, reference can be made to relevant documents in the prior art, which are not elaborated in the embodiments of the present application. When the distortion coefficient solved through the camera calibration is obtained, distortion elimination can be performed on the processed calibration visible light images and the processed calibration thermal infrared images, so that no radial distortion exists in the processed calibration visible light images and the processed calibration thermal infrared images.

Secondly, for the calibration visible light images and the calibration thermal infrared images after the distortion elimination, according to matching a series of feature points, how coordinates of the feature points in a thermal infrared image are translated and rotated to match coordinates of corresponding feature points in a visible light image can be determined with corresponding mathematical manners, thereby obtaining one or more correction parameters between the visible light image and the thermal infrared image. The correction parameters can include distortion coefficient(s), translation vector(s) and one or more rotation matrices.

That is, according to the correction parameters, positions of corresponding feature points in the visible light image and the thermal infrared image can be adjusted to be on the same horizontal line, and there is merely a difference in abscissa between the corresponding feature points.

As an example, referring to part (c) in FIG. 4, when the binocular correction is performed, point A1 in the visible light image and feature point A2 in the thermal infrared image are located on the same horizontal line, and point B1 in the visible light image and feature point B2 in the thermal infrared image are located on the same horizontal line.

In addition, referring to FIG. 4, when binocular correction is performed on the calibration visible light images and the calibration thermal infrared images, image cropping (e.g., image cutting off) can be performed on the calibration visible light images and the calibration thermal infrared images, so as to crop local images including a target object (a target object in FIG. 4 is the target temperature calibration board). In this way, it is convenient to determine, according to a horizontal offset for pixels of the target object in a calibration visible light image and a calibration thermal infrared image, binocular parallax between the calibration visible light image and the calibration thermal infrared image.

In the embodiments of the present application, by performing binocular correction on the calibration visible light images and the calibration thermal infrared images, correction parameter(s) between the visible light image and the thermal infrared image can be obtained. In this way, based on correction parameter(s), a calibration thermal infrared image can be translated and rotated, so that corresponding feature points in a calibration visible light image and the calibration thermal infrared image can be located on the same horizontal line.

Next, based on a visible light image shot by a visible light camera and a thermal infrared image shot by a thermal infrared camera, temperature measurement methods provided by the embodiments of the present application are described in detail.

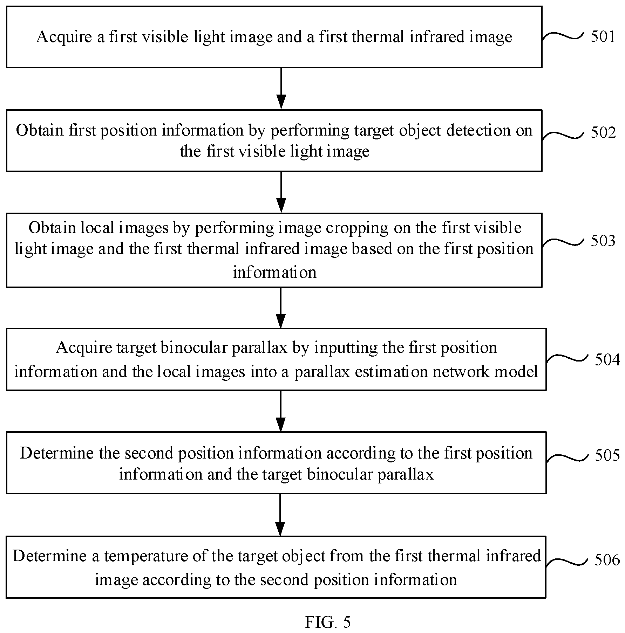

FIG. 5 is a flowchart of a temperature measurement method provided by the embodiments of the present application, and the method can be applied to computer device 102 in temperature measurement system 100 described above. Referring to FIG. 5, the method includes steps 501 to 506.

At step 501, a first visible light image and a first thermal infrared image are acquired.

In a possible implementation, the computer device can acquire a second visible light image and a second thermal infrared image, where the second visible light image and the second thermal infrared image are captured by a heterogeneous binocular camera. The computer device can perform scaling on the second visible light image and the second thermal infrared image to obtain a processed visible light image and a processed thermal infrared image. The computer device can obtain one or more correction parameters corresponding to the heterogeneous binocular camera, and perform binocular correction on the processed visible light image and the processed thermal infrared image according to the one or more correction parameters, and obtain the first visible light image and the first thermal infrared image.

For an implementation process of obtaining the first visible light image and the first thermal infrared image, reference can be made to the binocular calibration process in the embodiments described above, which will not be repeated here. For example, scaling, distortion elimination, feature point matching and other processing can be performed on the first visible light image and the first thermal infrared image. When feature points are matched and aligned, cropping can be further performed on the processed visible light image and thermal infrared image, to obtain the first visible light image and the first thermal infrared image. The cropping includes, for example, cropping partial edges, etc., to remove a redundant part of edges.

It should be noted that the first visible light image and the first thermal infrared image have been subjected to binocular correction, so there is merely a horizontal offset between pixels in the first visible light image and corresponding pixels in the first thermal infrared image. The horizontal offset can indicate binocular parallax between the first visible light image and the first thermal infrared image.

At step 502, first position information is obtained by performing target object detection on the first visible light image.

The first position information indicates a position of a target object in the first visible light image. The first position information may include the following two possible representations, which may be regarded as two possible display manners as well.

In a possible display manner, based on the first visible light image, a rectangular coordinate system can be established, so that coordinates of feature points of the target object in the rectangular coordinate system can be determined. The first position information of the target object in the first visible light image can be determined according to the coordinates of feature points. It should be noted that the computer device can establish identical rectangular coordinate systems in the first visible light image and the first thermal infrared image, and in step 502, the computer device can obtain the first position information according to the coordinates of feature points of the target object in the rectangular coordinate system that is established based on the first visible light image.

In another possible display manner, by performing target object detection on the first visible light image, a first target area can be directly framed in the first visible light image. In this way, a position of the target object in the first visible light image can be determined. Although a background area may also be included in the frame, an entire area of the target object may be covered without missing information, which means that the framed target area contains more contour information of the target object.

At step 503, local images are obtained by performing image cropping on the first visible light image and the first thermal infrared image based on the first position information.

To reduce interference object information included in the first visible light image and the first thermal infrared image, when the target object is detected and the first position information is determined, a local visible light image corresponding to the first position information can be cropped from the first visible light image. Meanwhile, based on the first position information, a local thermal infrared image corresponding to the first position information can be cropped from the first thermal infrared image. Subsequently, the computer device can input the first position information, the local visible light image and the local thermal infrared image into the parallax estimation network model at step 504.

Binocular parallax exists between the first visible light image and the first thermal infrared image. The first thermal infrared image has fewer pixels, the clarity of the captured target object is poor, and there is edge adhesion between the target object and other background objects. As a result, the local image cropped from the first thermal infrared image based on the first position information may not necessarily contain all information of the target object. Therefore, optionally, prior to performing the following step 504, expansion can be performed on the first position information, so that the cropped local image can include all the information of the target object.

In a possible implementation, an implementation process of obtaining the local images by cropping the first visible light image and the first thermal infrared image based on the first position information can include: obtaining target position information by performing position expansion on the first position information; and obtaining a local visible light image by cropping an image corresponding to the target position information from the first visible light image, and obtaining a local thermal infrared image by cropping an image corresponding to the target position information from the first thermal infrared image.

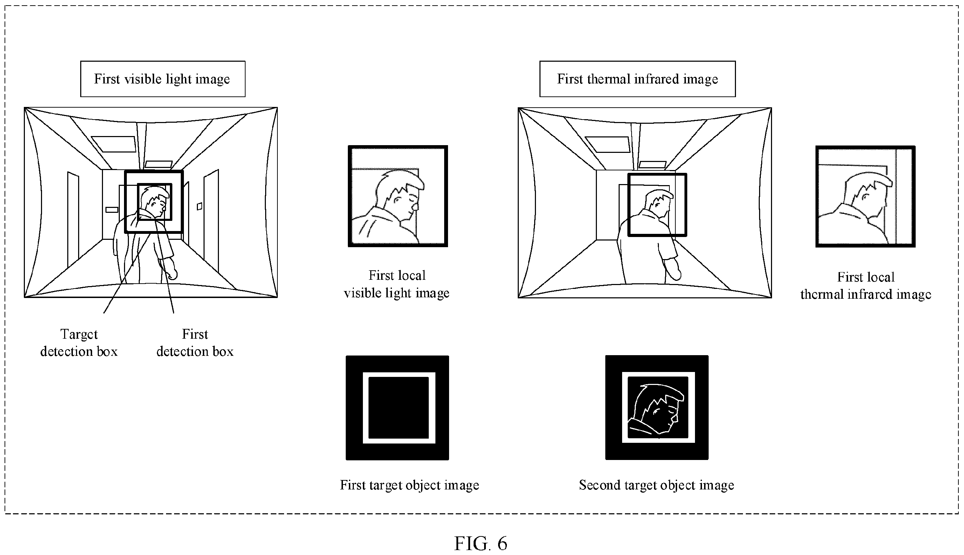

In an example, please refer to FIG. 6, which is a schematic diagram of a cropped local image provided by the embodiments of the present application. Assuming that the target object indicates a face, based on the first visible light image and the first thermal infrared image, the first position information can be obtained by determining a position of the face in the first visible light image with a face detection algorithm. The first position information can include at least one of face box position information, face key point position information, or face orientation information.

Since there is binocular parallax between the first thermal infrared image and the first visible light image, and an outline of the target object in the first thermal infrared image is relatively blurry, to ensure that a cropped target area contains the entire face, position expansion can be performed on the first position information to obtain target position information. The first position information can include the first detection box shown in FIG. 6, the target position information can include the target detection box shown in FIG. 6, and a center of the first detection box coincides with a center of the target detection box.

A process for implementing obtaining the target position information by performing the position expansion on the first position information can include: obtaining the target detection box by expanding the first detection box by a target size in all directions based on the center of the first detection box.

As an example, assuming that the first detection box indicates the rectangular area shown in FIG. 6 and a predetermined target size is 2 cm, according to the target size, four edges of the first detection box are all expanded outward by 2 cm to obtain the target detection box.

Based on the target detection box being subjected to the position expansion, an image including a face is cropped from the first visible light image to obtain a local visible light image, and an image including the face is cropped from the first thermal infrared image to obtain a local thermal infrared image.

In an example, in a case that the first position information is represented in a form of coordinates, position coordinates of the first detection box, the cropped local visible light image and local thermal infrared image can be input to a parallax estimation network model, so as to execute the following step 504.

In a case that the first position information is represented in a form of images, based on the expanded target detection box shown in FIG. 6, a pure black image of the same size as the target detection box can be cropped from the first visible light image. The first detection box for the face can be drawn in the pure black image based on the acquired position of the first detection box, so as to obtain a first target object image shown in FIG. 6. Furthermore, drawing can be performed based on acquired face key point information within the first detection box in the pure black image, so as to obtain a second target object image shown in FIG. 6. In addition, the target object images may further include other information reflecting the position of the face in the first visible light image, which is not limited in the embodiments of the present application.

In this way, the first target object image, the second target object image, and the cropped local visible light image as well as the cropped local thermal infrared image have the same resolution.

In another example, in a case that the first position information is represented in the form of images, the first target object image, the local visible light image and the local thermal infrared image may be input to the parallax estimation network model, then the following step 504 is executed. Or, the second target object image, the local visible light image and the local thermal infrared image may be input to the parallax estimation network model to execute the following step 504.

It should be noted that, in a case that there are at least two target objects in the first visible light image, if the target objects are detected from the first visible light image, image cropping can be performed on these target objects. And then, for each target object, local images containing the target object and first position information of the target object can be input to the parallax estimation network model.

For example, in a case that a first visible light image includes three characters A, B and C, based on first position information of character A in the first visible light image, a local visible light image can be cropped from the first visible light image, and a local thermal infrared image can be cropped from a first thermal infrared image. A first position of character A and these two local images can be taken as a first input group. Similar processing can be performed on character B and character C in the first visible light image, a second position and two local images of character B can be taken as a second input group, and a third position and two local images of character C can be taken as a third input group. The first input group, the second input group and the third input group can be input into the parallax estimation network model, to execute the following step 504. The above-mentioned first position indicates a position of character A in the first visible light image, the second position indicates a position of character B in the first visible light image, and the third position indicates a position of character C in the first visible light image. The naming of "first," "second," and "third" described above is merely for this example, and does not constitute a limitation on other example embodiments of the present application.

That is, in a case that there are a plurality of target objects in an acquired first visible light image, image cropping is performed for each target object separately.

At step 504, target binocular parallax is acquired by inputting the first position information and the local images into a parallax estimation network model, where the target binocular parallax indicates binocular parallax between a visible light image and a thermal infrared image including the target object.

The parallax estimation network model can include one or more feature extraction network layers, one or more feature fusion network layers and one or more parallax estimation network layers.

In a possible implementation, an implementation process of step 504 is as follows: a computer device can invoke the feature extraction network layer(s) to perform feature extraction on the first position information and the local images, so as to obtain one or more high-level features of the target object; invoke the feature fusion network layer(s) to perform feature fusion on the one or more high-level features of the target object to obtain one or more fusion features of the target object; and invoke the parallax estimation network layer(s) to perform parallax estimation on the one or more fusion features of the target object, to obtain the target binocular parallax.

The feature extraction network layer(s) can be used to perform at least one convolution on the input first position information and local images, to extract the one or more high-level features of the target object. In the embodiments of the present application, the number of convolution layers and a convolution kernel are not limited.

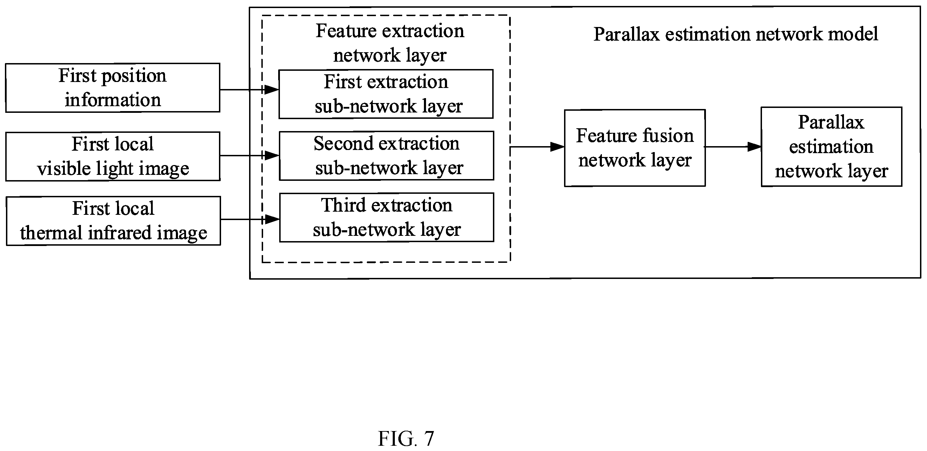

Since the input of the parallax estimation network model includes the first position information, the local visible light image and the local thermal infrared image, the feature extraction network layer can further include a first extraction sub-network layer, a second extraction sub-network layer and a third extraction sub-network layer. The first position information is for indicating a position of the target object in the first visible light image. In an example, please refer to FIG. 7, which is a schematic diagram of a parallax estimation network model provided by the embodiments of the present application.

Further, for obtaining the one or more high-level features of the target object by invoking the feature extraction network layer(s) to perform feature extraction on the local images, an implementation process thereof can include the following. The first extraction sub-network layer is invoked to perform feature extraction on the first position information, so as to obtain one or more first high-level features. The second extraction sub-network layer is invoked to perform feature extraction on the local visible light image to obtain one or more second high-level features. The third extraction sub-network layer is invoked to perform feature extraction on the local thermal infrared image, to obtain one or more third high-level features. The high-level features of the target object can include first high-level feature(s), second high-level feature(s), and third high-level feature(s).

In addition, prior to determining the target binocular parallax between the first visible light image and the first thermal infrared image with the above-mentioned parallax estimation network model, the parallax estimation network model is to be trained. When binocular disparity for a training sample output by the parallax estimation network model is within an allowable error range, the training for the parallax estimation network model may be completed.

A training process for the parallax estimation network model can include the following operations. One or more training samples are acquired, where each of the training samples can include a reference visible light image, a reference thermal infrared image, reference position information and reference binocular parallax. The reference position information can indicate a position of a target object in the reference visible light image, and the reference binocular parallax can include binocular parallax between the reference visible light image and the reference thermal infrared image. The parallax estimation network model is invoked to process the reference visible light images, the reference thermal infrared images, and the reference position information, to obtain estimated binocular parallax. A predicted loss value of the parallax estimation network model is calculated based on the estimated binocular parallax and the reference binocular parallax, and parameters of the parallax estimation network model are adjusted according to the predicted loss value. It should be noted that the target object in the reference visible light image and the reference thermal infrared image belongs to the same type of objects as the target object in the first visible light image and the first thermal infrared image described above, for example, the target objects may be faces, bodies, or vehicles and the like. However, the embodiments of the present application do not limit whether target objects in various images are the same object, that is, target objects in various images may be different objects or the same object. In addition, a reference visible light image and a reference thermal infrared image included in each training sample can be images obtained by simultaneously shooting a target object with a heterogeneous binocular camera.

As an example, the reference binocular parallax can be obtained through a device such as a laser radar, a depth camera or the like, or the reference binocular parallax between the reference visible light image and the reference thermal infrared image can be determined through manual labelling, which is not limited by the embodiments of the present application.

At step 505, the second position information is determined according to the first position information and the target binocular parallax, where the second position information indicates a position of the target object in the first thermal infrared image.

In a possible implementation, a computer device can take a difference between the first position information and the target binocular parallax as the second position information.

The target binocular parallax can indicate a parallax value between a first visible light image and a first thermal infrared image containing a target object, and the parallax value can reflect an overall offset of the target object in the first thermal infrared image relative to the target object in the first visible light image.

In a case that the target binocular parallax is represented as a parallax value, an implementation process of the above step 505 can include: for each pixel indicated by the first position information in the first thermal infrared image, taking a difference between an abscissa value of the pixel and the parallax value as the second position information.

In addition, the target binocular parallax may include a parallax map between the first visible light image and the first thermal infrared image containing the target object. For each pixel in the parallax map, a grayscale value thereof can represent a difference between abscissa values of corresponding pixels in the first visible light image and in the first thermal infrared image.

In a case that the target binocular parallax is represented with a parallax map, the implementation process of the above step 505 can include: for each pixel indicated by the first position information in the first thermal infrared image, taking a difference between an abscissa value of the pixel and a grayscale value of a pixel at a corresponding position in the parallax map as the second position information.

At step 506, a temperature of the target object is determined from the first thermal infrared image according to the second position information.

A thermal infrared image can reflect temperature information of all objects above absolute zero in a captured scene, and colors displayed in the thermal infrared image vary from temperature to temperature. As such, when the second position information is determined from the first thermal infrared image, a computer device can determine the temperature of the target object according to a color presented by an area indicated by the second position information.

It should be noted that the first thermal infrared image is obtained through remote shooting with a heterogeneous binocular camera, which is different from a handheld thermometer performing temperature measurement at close range. Therefore, a deviation arises for the computer device determining a temperature of the target object based on the displayed color of the area where the target object is located in the first thermal infrared image. That is to say, the measured temperature attenuates with the distance for temperature measurement. The farther the distance between the target object and the heterogeneous binocular camera, the greater the deviation between the temperature of the target object determined by the computer device from the first thermal infrared image and an actual temperature of the target object. The closer the distance between the target object and the heterogeneous binocular camera, the closer the temperature of the target object determined by the computer device from the first thermal infrared image is to the actual temperature of the target object. As such, when the temperature of the target object is determined from the first thermal infrared image, the computer device can further correct the temperature according to the distance, and take the corrected temperature as the actual temperature of the target object.

In a possible implementation, the computer device performing correction on the temperature of the target object can include: determining a distance between the target object and the heterogeneous binocular camera according to the target binocular parallax, acquiring a temperature attenuation value corresponding to the distance, and performing correction on the temperature according to the temperature attenuation value to obtain a corrected temperature of the target object.

A correlation between distance and parallax may be:

$$Z = \frac{f \times b}{d}.$$

Z can represent the distance between the target object and the heterogeneous binocular camera, and $f$ can represent a focal length of the heterogeneous binocular camera. $b$ can represent a distance between optical centers of a visible light camera and a thermal infrared camera in the heterogeneous binocular camera, which also referred to as a baseline distance. $d$ can represent the target binocular parallax between the first visible light image and the first thermal infrared image.

That is, when the target binocular parallax $d$ between the first visible light image and the first thermal infrared image is determined, the distance between the target object and the heterogeneous binocular camera can be determined according to the correlation between distance and parallax described above.

It should be noted that there is a mapping correspondence between distance and temperature attenuation value. When the distance between the target object and the heterogeneous binocular camera is determined, the computer device can determine a temperature attenuation value corresponding to the distance according to the distance and the mapping correspondence between distance and temperature attenuation value. Optionally, the computer device can add the temperature of the target object determined from the first thermal infrared image to the temperature attenuation value corresponding to the distance, so as to obtain the corrected temperature of the target object.

For example, the temperature of the target object determined from the first thermal infrared image is 35°, the distance between the target object and the heterogeneous binocular camera is 30 meters, and a temperature attenuation value corresponding to the distance is 2°. Correction can be performed on the temperature according to the temperature attenuation value, and the corrected temperature of the target object is 37°.

For another example, the temperature of the target object determined from the first thermal infrared image is 37.5°, the distance between the target object and the heterogeneous binocular camera is 5 meters, and a temperature attenuation value corresponding to the distance is 0.5°. Correction can be performed on the temperature according to the temperature attenuation value, and the corrected temperature of the target object is 38°.

In summary, in technical solutions provided by the embodiments of the present application, by using a position of a target object in a visible light image and binocular parallax between the visible light image and a thermal infrared image, a position of the target object in the thermal infrared image can be determined. Further, according to the position of the target object in the thermal infrared image, a temperature of the target object can be determined from the thermal infrared image. Visible light images have high resolution, rich texture detail information and other characteristics compared with thermal infrared images. Comparing with determining the position of the target object directly based on a thermal infrared image, which may lead to inaccurate position determination, in the embodiments of the present application, the position of the target object in the thermal infrared image is determined indirectly based on the visible light image, and more texture detail information is incorporated during the position determination, so as to accurately and effectively determine the position of the target object in the thermal infrared image, which helps to determine the temperature of the target object based on a precise position of the target object.

Moreover, in the technical solutions provided by the embodiments of the present application, the binocular parallax between the visible light image and the thermal infrared image is determined according to the parallax estimation network model. When the training for the parallax estimation network model is completed, the binocular parallax can be obtained by inputting the local visible light image and the local thermal infrared image containing the target into the parallax estimation network model, thus reducing a series of trivial and complicated mathematical operations and providing a simple and efficient way to determine the binocular parallax. The efficiency of determining the binocular parallax can be improved through the parallax estimation network model, and the position of the target object is determined according to the binocular parallax, which improves the efficiency of determining the target object's position, so as to further improve the efficiency of temperature measurement for the target obj ect.

In addition, in the technical solutions provided by the embodiments of the present application, the input of the parallax estimation network model can include the local images cropped according to the position of the target object in the visible light image. Since a complete captured image can include not only the target object but also interference information such as the background, other objects or the like, compared with directly inputting the complete captured images into the parallax estimation network model, the embodiments of the present application input the local images related to the target object into a neural network model, which reduces the interference information in the captured image, helps to obtain more accurate binocular parallax, and fully improves the efficiency of temperature measurement.

All the above-mentioned optional technical solutions can be combined in any way to form optional embodiments of the present application, and the embodiments of the present application will not repeat them one by one.

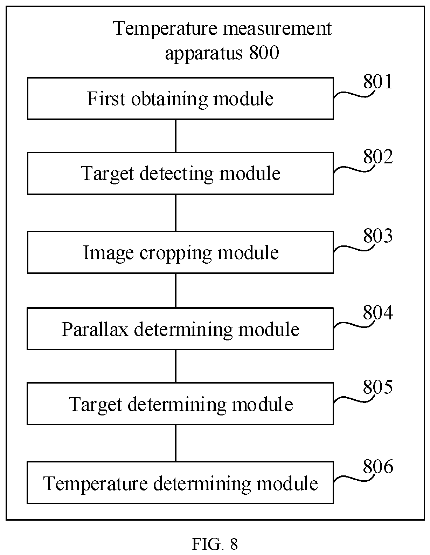

FIG. 8 is a structural schematic diagram of a temperature measurement apparatus provided by the embodiments of the present application. The apparatus 800 can include first obtaining module 801, target detecting module 802, image cropping module 803, parallax determining module 804, target determining module 805 and temperature determining module 806.

First obtaining module 801 is configured to obtain a first visible light image and a first thermal infrared image.

Target detecting module 802 is configured to obtain first position information by performing target object detection on the first visible light image, where the first position information indicates a position of a target object in the first visible light image.

Image cropping module 803 is configured to obtain local images by performing image cropping on the first visible light image and the first thermal infrared image based on the first position information.

Parallax determining module 804 is configured to obtain target binocular parallax by inputting the first position information and the local images into a parallax estimation network model, where the target binocular parallax indicates binocular parallax between a visible light image and a thermal infrared image including the target object.

Target determining module 805 is configured to determine second position information according to the first position information and the target binocular parallax, where the second position information indicates a position of the target object in the first thermal infrared image.

Temperature determining module 806 is configured to determine a temperature of the target object according to the second position information from the first thermal infrared image.

Optionally, image cropping module 803 includes:

a position expansion sub-module, configured to determine target position information by performing position expansion on the first position information; and
a cropping sub-module, configured to obtain a local visible light image by cropping an image corresponding to the target position information from the first visible light image, and obtain a local thermal infrared image by cropping an image corresponding to the target position information from the first thermal infrared image;
where the local images include the local visible light image and the local thermal infrared image.

Optionally, the first position information includes a first detection box, the target position information includes a target detection box, and a center of the first detection box coincides with a center of the target detection box; and

the position expansion sub-module is specifically configured to:
determine the target detection box by expanding the first detection box by a target size in all directions based on the center of the first detection box.

Optionally, the parallax estimation network model includes one or more feature extraction network layers, one or more feature fusion network layers and one or more parallax estimation network layers;

where parallax determining module 804 includes:
a feature extraction sub-module, configured to invoke the one or more feature extraction network layers to perform feature extraction on the first position information and the local images, so as to obtain one or more high-level features of the target object;
a feature fusion sub-module, configured to invoke the one or more feature fusion network layers to perform feature fusion on the one or more high-level features of the target object, so as to obtain one or more fusion features of the target object; and
a parallax estimation sub-module, configured to invoke the one or more parallax estimation network layers to perform parallax estimation on the one or more fusion features of the target object, so as to obtain the target binocular parallax.

Optionally, the local images include a local visible light image and a local thermal infrared image, and the one or more feature extraction network layers include a first extraction sub-network layer, a second extraction sub-network layer and a third extraction sub-network layer;

the feature extraction sub-module includes:
a first extraction sub-unit, configured to invoke the first extraction sub-network layer to perform feature extraction on the first position information, so as to obtain one or more first high-level features;
a second extraction sub-unit, configured to invoke the second extraction sub-network layer to perform feature extraction on the local visible light image, so as to obtain one or more second high-level features; and
a third extraction sub-unit, configured to invoke the third extraction sub-network layer to perform feature extraction on the local thermal infrared image, so as to obtain one or more third high-level features;
where the high-level features of the target object include the first high-level features, the second high-level features, and the third high-level features.

Optionally, apparatus 800 further includes a training module and an adjusting module.
The first obtaining module is configured to acquire one or more training samples, where each of the training samples includes a reference visible light image, a reference thermal infrared image, reference position information and reference binocular parallax, the reference position information indicates a position of a target object in the reference visible light image, and the reference binocular parallax includes binocular parallax between the reference visible light image and the reference thermal infrared image;

the parallax determining module is configured to obtain estimated binocular parallax by invoking the parallax estimation network model to process the reference visible light image, the reference thermal infrared image, and the reference position information;
the training module is configured to calculate a predicted loss value of the parallax estimation network model according to the estimated binocular parallax and the reference binocular parallax; and
the adjusting module is configured to adjust parameters of the parallax estimation network model according to the predicted loss value.

Optionally, apparatus 800 further includes:

a distance determining module, configured to determine a distance between the target object and a heterogeneous binocular camera according to the target binocular parallax, where the heterogeneous binocular camera includes a visible light camera for capturing visible light images and a thermal infrared camera for capturing thermal infrared images;
a second obtaining module, configured to acquire a temperature attenuation value corresponding to the distance; and
a temperature correcting module, configured to obtain a corrected temperature of the target object by performing correction on the temperature according to the temperature attenuation value.

Optionally, first obtaining module 801 includes:

a first obtaining sub-module, configured to obtain a second visible light image and a second thermal infrared image, where the second visible light image and the second thermal infrared image are captured by a heterogeneous binocular camera;
an image adjusting sub-module, configured to obtain a processed visible light image and a processed thermal infrared image by performing scaling on the second visible light image and the second thermal infrared image;
a second obtaining sub-module, configured to obtain one or more correction parameters corresponding to the heterologous binocular camera; and
a correcting sub-module, configured to obtain the first visible light image and the first thermal infrared image by performing binocular correction on the processed visible light image and the processed thermal infrared image according to the one or more correction parameters.

Optionally, the second obtaining sub-module includes:

a first obtaining sub-unit, configured to obtain calibration visible light images and calibration thermal infrared images, where the calibration visible light images and the calibration thermal infrared images are obtained by capturing a target temperature calibration board with the heterogeneous binocular camera;

an image adjusting sub-unit, configured to obtain processed calibration visible light images and processed calibration thermal infrared images by performing scaling on the calibration visible light images and the calibration thermal infrared images; and

a correcting sub-unit, configured to determine the one or more correction parameters by performing binocular correction on the processed calibration visible light images and the processed calibration thermal infrared images.

Optionally, target determining module 805 is configured to:
take a difference between the first position information and the target binocular parallax as the second position information.

In summary, in technical solutions provided by the embodiments of the present application, by using a position of a target object in a visible light image and binocular parallax between the visible light image and a thermal infrared image, a position of the target object in the thermal infrared image can be determined. Further, according to the position of the target object in the thermal infrared image, a temperature of the target object can be determined from the thermal infrared image. Visible light images have high resolution, rich texture detail information, and other characteristics compared with thermal infrared images. Comparing with determining the position of the target object directly based on a thermal infrared image, which may lead to inaccurate position determination, in the embodiments of the present application, the position of the target object in the thermal infrared image is determined indirectly based on the visible light image, and more texture detail information is incorporated during the position determination, so as to accurately and effectively determine the position of the target object in the thermal infrared image, which helps to determine the temperature of the target object based on a precise position of the target object.

Moreover, in the technical solutions provided by the embodiments of the present application, the binocular parallax between the visible light image and the thermal infrared image is determined according to the parallax estimation network model. When the training for the parallax estimation network model is completed, the binocular parallax can be obtained by inputting the local visible light image and the local thermal infrared image containing the target into the parallax estimation network model, thus reducing a series of trivial and complicated mathematical operations and providing a simple and efficient way to determine the binocular parallax. The efficiency of determining the binocular parallax can be improved through the parallax estimation network model, and the position of the target object is determined according to the binocular parallax, which improves the efficiency of determining the target object's position, so as to further improve the efficiency of temperature measurement for the target object.

In addition, in the technical solutions provided by the embodiments of the present application, the input of the parallax estimation network model can include the local image cropped according to the position of the target object in the visible light image. Since a complete captured image can include not only the target object but also interference information such as the background, other objects or the like, compared with directly inputting the complete captured images into the parallax estimation network model, the embodiments of the present application input the local images related to the target object into a neural network model, which reduces the interference information in the captured image, helps to obtain more accurate binocular parallax, and fully improves the efficiency of temperature measurement.

It should be noted that, in the above-mentioned embodiments, for the temperature measurement apparatus determining the temperature of the target object through the thermal infrared image, the division of functional modules described above is merely for example. In practical applications, the above functions can be assigned to different functional modules according to needs. That is to say, an internal structure of the apparatus can be divided into different functional modules to complete all or part of the functions described above. In addition, the temperature measurement apparatus provided by the above-mentioned embodiments and the temperature measurement method embodiments belong to the same concept, and the specific implementation process is detailed in the method embodiments, which will not be repeated here.

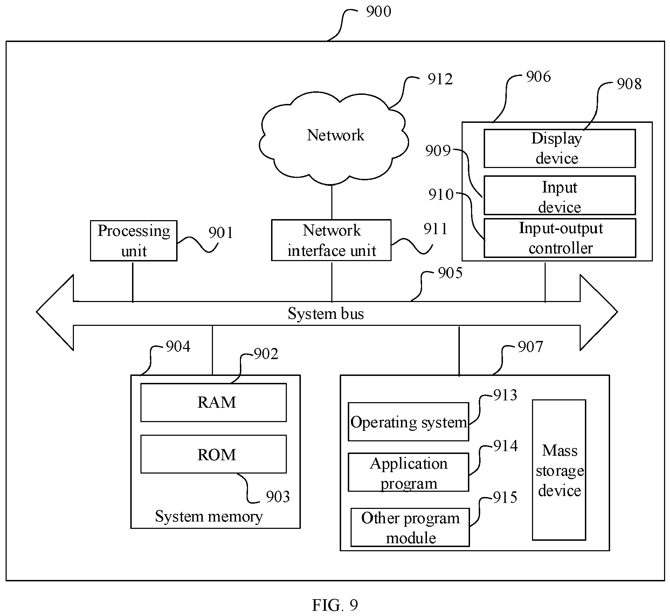

FIG. 9 is a structural block diagram of a computer device provided by the embodiments of the present application. Computer device 900 can implement examples of the temperature measurement methods described above.

Computer device 900 can include processing unit (such as a CPU (Central Processing Unit), a GPU (Graphics Processing Unit), and an FPGA (Field Programmable Gate Array) or the like) 901, system memory 904 including RAM (Random-Access Memory) 902 and ROM (Read-Only Memory) 903, and system bus 905 connecting system memory 904 and processing unit 901. Computer device 900 can also include I/O system (basic input/output system) 906 for helping transferring information between various components within the computer device, and mass storage device 907 for storing operating system 913, application program 914, and other program module 915.

Basic input/output system 906 may include display device 908 for displaying information and input device 909 such as a mouse, keyboard, or the like for a user inputting information. Both display device 908 and input device 909 are connected to processing unit 901 via input-output controller 910 connected to system bus 905. Basic input/output system 906 may also include input-output controller 910 for receiving and processing inputs from a plurality of other devices such as a keyboard, mouse, or electronic stylus. Similarly, input-output controller 910 can further provide an output to a display, printer, or other type of output devices.

Mass storage device 907 is connected to processing unit 901 via a mass storage controller (not shown) connected to system bus 905. Mass storage device 907 and computer readable media associated with mass storage device 907 can provide non-volatile storage for computer device 900. That is to say, mass storage device 907 can include a computer-readable medium (not shown) such as a hard disk or a CD-ROM (Compact Disc Read-Only Memory) drive.

Without losing generality, the computer-readable medium may include a computer storage medium and a communication medium. The computer storage medium may include volatile and non-volatile media, removable and non-removable media implemented in any method or technology for storing information such as computer readable instructions, data structures, program modules, or other data. The computer storage medium may include RAM, ROM, EPROM (Erasable Programmable Read-Only Memory), EEPROM (Electrically Erasable Programmable Read-Only Memory), flash memory or other solid state storage technology, CD-ROM, DVD (Digital Video Disc) or other optical storage, cartridge, tape, disk storage or other magnetic storage device. Certainly, a person skilled in the art can know that the computer storage medium is not limited to the above. System memory 904 and mass storage device 907 described above may be collectively referred to as a memory.

In the embodiments of the present application, computer device 900 may also operate via a remote computer connected with a network, for example, Internet. That is, computer device 900 may be connected to network 912 via network interface unit 911 connected with system bus 905, or network interface unit 911 can be used to connect computer device 900 to other types of networks or remote computer systems (not shown).

The memory also includes at least one instruction, at least one program, a code set, or an instruction set. The at least one instruction, at least one program, the code set, or the instruction set can be stored in the memory and configured to be executed by one or more processors to implement the temperature measurement methods described above.

Those skilled in the art can understand that the structure shown in FIG. 9 does not constitute limitation to computer device 900, and computer device 900 may include more or fewer components than shown or may combine some components or adopt different component arrangements.

In example embodiments, there is further provided a computer readable storage medium. The computer readable storage medium stores instructions, and while the instructions are executed by a processor, the temperature measurement methods described above are implemented.

In example embodiments, there is further provided a computer program product, when the computer program product is executed, the temperature measurement methods described above are implemented.

It should be understood that the term "a plurality of" mentioned herein refers to two or more. "And/or" describes a correlation of correlated objects, indicating that three relationships may exist. For example, A and/or B can indicate A alone, both of A and B, and B alone. Character "/" generally indicates that the before and after associated objects are in a correlation of "or".

Those skilled in the art can understand that all or part of steps in the above embodiments can be realized by hardware, or by a program to instruct the relevant hardware to do so, and the program can be stored in a computer readable storage medium. The above-mentioned storage medium can be read-only memory, disk or CD-ROM, and the like.

The above described is only a better embodiment of the present application and is not intended to limit the present application, and any modification, equivalent replacement, improvement, etc. made within the spirit and principles of the present application shall be included in the scope of protection of the present application.

## Claims

1. A temperature measurement method, comprising:

   obtaining a first visible light image and a first thermal infrared image;
   obtaining first position information by performing target object detection on the first visible light image, wherein the first position information indicates a position of a target object in the first visible light image;
   obtaining local images by performing image cropping on the first visible light image and the first thermal infrared image based on the first position information;
   obtaining target binocular parallax by inputting the first position information and the local images into a parallax estimation network model, wherein the target binocular parallax indicates binocular parallax between a visible light image and a thermal infrared image including the target object;
   determining second position information according to the first position information and the target binocular parallax, wherein the second position information indicates a position of the target object in the first thermal infrared image; and

determining a temperature of the target object according to the second position information from the first thermal infrared image.

2. The method according to claim 1, wherein obtaining the local images by performing the image cropping on the first visible light image and the first thermal infrared image based on the first position information comprises:

determining target position information by performing position expansion on the first position information; and

obtaining a local visible light image by cropping an image corresponding to the target position information from the first visible light image, and obtaining a local thermal infrared image by cropping an image corresponding to the target position information from the first thermal infrared image;

wherein the local images comprise the local visible light image and the local thermal infrared image.

3. The method according to claim 2, wherein the first position information comprises a first detection box, the target position information comprises a target detection box, and a center of the first detection box coincides with a center of the target detection box; and

obtaining the target position information by performing the position expansion on the first position information comprises:

determining the target detection box by expanding the first detection box by a target size in all directions based on the center of the first detection box.

4. The method according to any one of claims 1 to 3, wherein the parallax estimation network model comprises one or more feature extraction network layers, one or more feature fusion network layers and one or more parallax estimation network layers;

wherein obtaining the target binocular parallax by inputting the first position information and the local images into the parallax estimation network model comprises:

obtaining one or more high-level features of the target object by invoking the one or more feature extraction network layers to perform feature extraction on the first position information and the local images;

obtaining one or more fusion features of the target object by invoking the one or more feature fusion network layers to perform feature fusion on the one or more high-level features of the target object; and

obtaining the target binocular parallax by invoking the one or more parallax estimation network layers to perform parallax estimation on the one or more fusion features of the target obj ect.

5. The method according to claim 4, wherein the local images comprise a local visible light image and a local thermal infrared image, and the one or more feature extraction network layers comprise a first extraction sub-network layer, a second extraction sub-network layer and a third extraction sub-network layer;

obtaining the one or more high-level features of the target object by invoking the one or more feature extraction network layers to perform the feature extraction on the first position information and the local images comprises:

obtaining one or more first high-level features by invoking the first extraction sub-network layer to perform feature extraction on the first position information;

obtaining one or more second high-level features by invoking the second extraction sub-network layer to perform feature extraction on the local visible light image; and

obtaining one or more third high-level features by invoking the third extraction sub-network layer to perform feature extraction on the local thermal infrared image;

wherein the high-level features of the target object comprise the first high-level features, the second high-level features, and the third high-level features.

6. The method according to any one of claims 1 to 3, wherein a training process of the parallax estimation network model comprises:

acquiring one or more training samples, wherein each of the training samples comprises a reference visible light image, a reference thermal infrared image, reference position information and reference binocular parallax, the reference position information indicates a position of a target object in the reference visible light image, and the reference binocular parallax comprises binocular parallax between the reference visible light image and the reference thermal infrared image;

obtaining estimated binocular parallax by invoking the parallax estimation network model to process the reference visible light image, the reference thermal infrared image, and the reference position information;

calculating a predicted loss value of the parallax estimation network model according to the estimated binocular parallax and the reference binocular parallax; and

adjusting parameters of the parallax estimation network model according to the predicted loss value.

7. The method according to any one of claims 1 to 3, after determining the temperature of the target object according to the second position information from the first thermal infrared image, the method further comprises:

determining a distance between the target object and a heterogeneous binocular camera according to the target binocular parallax, wherein the heterogeneous binocular camera comprises a visible light camera for capturing visible light images and a thermal infrared camera for capturing thermal infrared images;

acquiring a temperature attenuation value corresponding to the distance; and

obtaining a corrected temperature of the target object by performing correction on the temperature according to the temperature attenuation value.

8. The method according to any one of claims 1 to 3, wherein obtaining the first visible light image and the first thermal infrared image comprises:

obtaining a second visible light image and a second thermal infrared image, wherein the second visible light image and the second thermal infrared image are captured by a heterogeneous binocular camera;

obtaining a processed visible light image and a processed thermal infrared image by performing scaling on the second visible light image and the second thermal infrared image;

obtaining one or more correction parameters corresponding to the heterologous binocular camera; and

obtaining the first visible light image and the first thermal infrared image by performing binocular correction on the processed visible light image and the processed thermal infrared image according to the one or more correction parameters.

9. The method according to claim 8, wherein obtaining the one or more correction parameters corresponding to the heterologous binocular camera comprises:

obtaining calibration visible light images and calibration thermal infrared images, wherein the calibration visible light images and the calibration thermal infrared images are obtained by capturing a target temperature calibration board with the heterogeneous binocular camera;

obtaining processed calibration visible light images and processed calibration thermal infrared images by performing scaling on the calibration visible light images and the calibration thermal infrared images; and

determining the one or more correction parameters by performing binocular correction on the processed calibration visible light images and the processed calibration thermal infrared images.

10. The method according to any one of claims 1 to 3, wherein determining the second position information according to the first position information and the target binocular parallax comprises:

taking a difference between the first position information and the target binocular parallax as the second position information.

11. A temperature measurement apparatus, comprising:

a first obtaining module, configured to obtain a first visible light image and a first thermal infrared image;

a target detecting module, configured to obtain first position information by performing target object detection on the first visible light image, wherein the first position information indicates a position of a target object in the first visible light image;

an image cropping module, configured to obtain local images by performing image cropping on the first visible light image and the first thermal infrared image based on the first position information;

a parallax determining module, configured to obtain target binocular parallax by inputting the first position information and the local images into a parallax estimation network model, wherein the target binocular parallax indicates binocular parallax between a visible light image and a thermal infrared image including the target object;

a target determining module, configured to determine second position information according to the first position information and the target binocular parallax, wherein the second position information indicates a position of the target object in the first thermal infrared image; and

a temperature determining module, configured to determine a temperature of the target object according to the second position information from the first thermal infrared image.

12. A temperature measurement system, comprising a heterogeneous binocular camera and a computer device, wherein

the heterogeneous binocular camera comprises a visible light camera and a thermal infrared camera;

the visible light camera is for capturing a first visible light image;

the thermal infrared camera is for capturing a first thermal infrared image;

the computer device comprises a processor, which is configured to:

obtain first position information by performing target object detection on the first visible light image, wherein the first position information indicates a position of a target object in the first visible light image;

obtain local images by performing image cropping on the first visible light image and the first thermal infrared image based on the first position information;

obtain target binocular parallax by inputting the first position information and the local images into a parallax estimation network model, wherein the target binocular parallax indicates binocular parallax between a visible light image and a thermal infrared image including the target object;

determine second position information according to the first position information and the target binocular parallax, wherein the second position information indicates a position of the target object in the first thermal infrared image; and

determine a temperature of the target object according to the second position information from the first thermal infrared image.

13. The temperature measurement system according to claim 12, wherein the computer device further comprises a display device; and
the display device is configured to display the temperature of the target object.

14. A computer readable storage medium, wherein the computer readable storage medium stores a computer program, and the computer program is executed by a processor to implement steps of the method in any one of claims 1 to 10.

15. A computer program product, wherein the computer program product comprises computer instructions, and while a computer runs the computer instructions, steps of the method in any one of claims 1 to 10 are implemented.

Temperature measurement system 100

Computer device 102

| Heterogeneous binocular camera 101 | → | Image acquiring module 1021 | → | Image correcting module 1022 |

Visible light image

Thermal infrared image

Target detecting module 1023

No target object detected → No output

Target object detected

Parallax estimation network model 1024 → Temperature determining module 1025

EP 4 242 609 A1

FIG. 1

Heterogeneous binocular
camera 101

Visible light
camera 1011

Thermal infrared
camera 1012

FIG. 2

Acquire calibration visible light images and calibration thermal infrared images | 301

Obtain processed calibration visible light images and processed calibration thermal infrared images by performing scaling on the calibration visible light images and the calibration thermal infrared images | 302

Obtain one or more correction parameters by performing binocular correction on the processed calibration visible light images and the processed calibration thermal infrared images | 303

FIG. 3

Binocular
correction

Target temperature
calibration board

Visible light image                                    Thermal infrared image

Image
calibration

(a)

Distortion
elimination

(b)

A1                                                              A2

Correction

B1                                                              B2

(c)

Image cropping

(d)

FIG. 4

Acquire a first visible light image and a first thermal infrared image ⌐～ 501

↓

Obtain first position information by performing target object detection on the first visible light image ⌐～ 502

↓

Obtain local images by performing image cropping on the first visible light image and the first thermal infrared image based on the first position information ⌐～ 503

↓

Acquire target binocular parallax by inputting the first position information and the local images into a parallax estimation network model ⌐～ 504

↓

Determine the second position information according to the first position information and the target binocular parallax ⌐～ 505

↓

Determine a temperature of the target object from the first thermal infrared image according to the second position information ⌐～ 506

FIG. 5

First visible light image

First thermal infrared image

First local
visible light image

First local
thermal infrared image

Target
detection box

First
detection box

First target object image

Second target object image

FIG. 6

FIG. 7

EP 4 242 609 A1

Temperature measurement
apparatus 800

First obtaining module 801

Target detecting module 802

Image cropping module 803

Parallax determining module 804

Target determining module 805

Temperature determining module 806

FIG. 8

FIG. 9

## INTERNATIONAL SEARCH REPORT

| International application No. |
| --- |
| **PCT/CN2021/130101** |

**A. CLASSIFICATION OF SUBJECT MATTER**

G01J 5/00(2022.01)i; G06K 9/00(2022.01)i

According to International Patent Classification (IPC) or to both national classification and IPC

**B. FIELDS SEARCHED**

Minimum documentation searched (classification system followed by classification symbols)

G01J;G06K;G06N

Documentation searched other than minimum documentation to the extent that such documents are included in the fields searched

Electronic data base consulted during the international search (name of data base and, where practicable, search terms used)

WPI; EPODOC; CNKI; CNPAT: 可见, 红外, 热, 图像, 成像, 双目, 双光, 双光谱, 视差, 视觉, visib+, infrared, IR, therm+, imag+, pictur+, binocula+, paralla+, disparit+

**C. DOCUMENTS CONSIDERED TO BE RELEVANT**

| Category* | Citation of document, with indication, where appropriate, of the relevant passages | Relevant to claim No. |
| --- | --- | --- |
| Y | CN 111623881 A (PING AN INTERNATIONAL SMART CITY TECHNOLOGY CO., LTD.) 04 September 2020 (2020-09-04) description, paragraphs [0057]-[0187], and figures 1-3 | 1-15 |
| Y | CN 104902182 A (NUBIA TECHNOLOGY CO., LTD.) 09 September 2015 (2015-09-09) description, paragraphs [0045]-[0095], and figures 1-4 | 1-15 |
| A | CN 110060272 A (HANGZHOU HIKVISION DIGITAL TECHNOLOGY CO., LTD.) 26 July 2019 (2019-07-26) entire document | 1-15 |
| A | CN 111639522 A (BEIJING MEGVII TECHNOLOGY CO., LTD.) 08 September 2020 (2020-09-08) entire document | 1-15 |
| A | CN 109308719 A (UNIVERSITY OF ELECTRONIC SCIENCE AND TECHNOLOGY OF CHINA) 05 February 2019 (2019-02-05) entire document | 1-15 |
| A | US 2006045329 A1 (JONES, Graham R. et al.) 02 March 2006 (2006-03-02) entire document | 1-15 |

☐ Further documents are listed in the continuation of Box C.　　☑ See patent family annex.

| * Special categories of cited documents: |
| --- |
| "A" document defining the general state of the art which is not considered to be of particular relevance |
| "E" earlier application or patent but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **14 January 2022** | **26 January 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/130101**

| Patent document cited in search report | | | Publication date (day/month/year) | Patent family member(s) | | | Publication date (day/month/year) |
|---|---|---|---|---|---|---|---|
| CN | 111623881 | A | 04 September 2020 | None | | | |
| CN | 104902182 | A | 09 September 2015 | CN | 104902182 | B | 19 April 2019 |
| CN | 110060272 | A | 26 July 2019 | None | | | |
| CN | 111639522 | A | 08 September 2020 | None | | | |
| CN | 109308719 | A | 05 February 2019 | None | | | |
| US | 2006045329 | A1 | 02 March 2006 | JP | 2006065862 | A | 09 March 2006 |
| | | | | JP | 4548840 | B2 | 22 September 2010 |
| | | | | US | 7505623 | B2 | 17 March 2009 |
| | | | | GB | 2417628 | A | 01 March 2006 |

Form PCT/ISA/210 (patent family annex) (January 2015)

**EP 4 242 609 A1**

**Patent documents cited in the description**

- CN 202011273221